# EUROPEAN PATENT SPECIFICATION

(11) **EP 3 123 866 B1**
(45) Date of publication and mention of the grant of the patent: **19.06.2019**
(21) Application number: 16181876.0
(22) Date of filing: 29.07.2016
(51) Int. Cl.: A21D 2/36, A21D 10/00, A21D 13/02, A21D 13/04

(54) **FOOD PRODUCT CONTAINING HEMP**
LEBENSMITTELPRODUKT ENTHALTEND HANF
PRODUIT ALIMENTAIRE CONTENANT DU CHANVRE

(30) Priority: 30.07.2015 IT UB20152678
(43) Date of publication of application: 01.02.2017
(73) Proprietor: IL GATTOPARDO S.A.S. di David Lipari & C., 47020 Cesena (FC) (IT)
(72) Inventor: Lipari, Davide, 47020 Cesena (FC) (IT)
(74) Representative: Busca, Andrea

(56) References cited:
- WO-A2-2010/137932
- DE-A1- 19 631 460
- Cano.Artist: "Hemp Pizza Rolls Recipe", Cookpad , 19 October 2013 (2013-10-19), XP002752929, Retrieved from the Internet: URL:https://cookpad.com/us/recipes/340090- hemp-pizza-rolls?ref=search [retrieved on 2016-01-12]
- DATABASE WPI Week 200253 Thomson Scientific, London, GB; AN 2002-497761 XP002752930, & RU 2 182 425 C1 (UNIV ORLOVO TECH) 20 May 2002 (2002-05-20)
- DATABASE WPI Week 201370 Thomson Scientific, London, GB; AN 2013-R06179 XP002767629, & CN 103 109 894 A (SUZHOU TIANNANXING BIOLOGICAL TECHNOLOGY) 22 May 2013 (2013-05-22)
- IVAN SVEC ET AL: "Characteristics of wheat, barley and hemp model composites", CZECH JOURNAL OF FOOD SCIENCE, vol. 33, no. 1, 2 March 2014 (2014-03-02), pages 66-71, XP055240536, CZ ISSN: 1212-1800, DOI: 10.17221/161/2014-CJFS
- Anonymous: "Wheat flour", Wikipedia , XP002764844, Retrieved from the Internet: URL:https://en.wikipedia.org/wiki/Wheat_fl our#Flour_strength_.E2.80.93_W_index [retrieved on 2016-12-01]

## Description

The present invention concerns the field of hemp-based food products.

The invention has been made with particular reference to leavened bread products and to pasta for making pasta dishes by cooking in water, such as dry pasta, including for example spaghetti and macaroni, or such as fresh pasta, including those made with egg, with potato or other ingredients, like for example tagliatelle or gnocchi. Of course, this does not rule out other applications.

The invention also concerns a kit for making the product, and a process for producing a leavened bread.

In the field of food products, especially organic food products, attempts to obtain products containing hemp to exploit its desirable characteristics are known.

Hemp flour, obtained from hemp seeds (generally Cannabis sativa and/or indica), contains proteins of good biological value, since, unlike the proteins that are found in vegetable foods, all of the essential amino acids are present in an optimal and also easily assimilable quantity, such as to make hemp (seeds, flour) an important vegetable protein source, especially in the daily diet of vegetarians and vegans. Since it is free from glutens it is also suitable for those suffering from celiac disease. Whereas carbohydrates (sugars) are present in minimal quantity, the fraction of indigestible carbohydrates, i.e. fibre, on the other hand, is well represented, bringing all the benefits attributed to products rich in fibre (regular bowel movements, better management of glycemia, blood-cholesterol and triglyceridemia).

A further beneficial characteristic of hemp flour is the presence of fats, in particular so-called "good fats", i.e. the polyunsaturated essential fatty acids of the series Omega 6 and Omega 3, in optimally balanced percentages. If, indeed, the modern diet tends to favour foods with Omega 6, leading to an imbalance of the Omega 6/ Omega 3 ratio (10:1), which strays from the recommended intake levels for a balanced diet, in hemp, on the other hand, this ratio is well balanced (3:1), to the benefit of an anti-inflammatory action, enhanced by the presence also of vitamins E, C (powerful antioxidants) as well as vitamins A and of group B and minerals such as calcium, potassium and magnesium.

Given such beneficial properties many attempts have been made to obtain hemp-based breads. However, the results have been very disappointing, for example because the flavour is bitter and imbalanced and the cooking eliminates the beneficial properties, in fact promoting the formation of acrylamide, notoriously cancerogenous.

Hemp, indeed, in flour form, is not very suitable for making breads due to its characteristics.

Reference can mainly be made, for example to its strength, also known as "bread-making factor" and indicated with the parameter W or even the large quantity of protein.

The strength of hemp is much higher than that of wheat flour, for which reason it is difficult if not impossible to obtain dough from it.

In fact, it is impossible to obtain a dough of only hemp, also because it would be inedible due to its flavour. Therefore, the attempts made have been in the direction of doughs of wheat flour and hemp flour.

However, also in this form the results have been mediocre, since hemp impedes proving, makes the dough not very elastic and causes separation in proving and in cooking. Moreover, the dough is difficult to cook, ending up tough and inedible. On the other hand, prolonged cooking easily carbonises the hemp making it harmful.

In order to solve this problem, only compromise solutions are currently known.

For example, doughs are known containing wheat flour, hemp flour and spelt flour. In particular spelt is used to lower the percentage of hemp, to the point of being more prevalent. The percentage of hemp is indeed 6% and that of spelt is 84%.

On the other hand, doughs are also known with a very large amount of hemp, over 30%. However, the hemp used in this case is of a very poor level so as to have a lower strength. Moreover, it is found that it is not pure like what is intended in the present invention, but contains traces of other cereals.

Moreover, such breads have an unpleasant taste, being of low organoleptic quality.

The two known attempts therefore are more commercial techniques than products that make it possible to take advantage of the beneficial nutritional characteristics of hemp.

Examples of known products with Hemp can be found at:
- Cano.Artist:"Hemp pizza rolls receipe" cookpad 19 October 2015 XP002752929; retrieved on the internet at the URL:
   http://cookpad.com/US/receipes/340090-hemp-pizza-rolls?
- DATABASE WPI Week 200253 Thomson scientific, london, GB; AN 2002-497761
   XP002752930
   & RU2182425C1 (Univ Orlov Tech) 20 may 2002
- DE19631460
- Wikipedia:
   https://en.wikipedia.org/wiki/wheat_flour#strengt h_.E2.80.93_W_index

In the field of pasta, similar problems have been encountered. In particular, hemp pasta falls apart during cooking, as made clear by the cooking water that is cloudy.

A general purpose of the present invention is therefore to totally or partially solve the problems of the prior art.

Another preferred purpose of the present invention is to provide a hemp-based food product that protects the positive characteristics of hemp while keeping an adequate taste balance.

A preferred purpose of the present invention is to make hemp of the best nutritional quality usable in food products intended for cooking.

Another preferred purpose of the present invention is to allow excellent food products to be easily made with hemp, so that they can be produced even at home and not only industrially.

According to a first general aspect thereof, the invention concerns a food product with hemp, cooked or intended for cooking, comprising at least one mixture of flours, water and yeast characterised in that every kg of mixture of flours comprises at least amounts of flours in the following ranges:
- 600-900 grams of soft wheat flour;
- 50-200 grams of durum wheat flour;
- 50-200 grams of hemp flour, as defined in claim 1.

The hemp flour is preferably wholemeal.

It should be observed that for the purposes of the present invention, for the sake of simple terminology, finer or coarser milled products suitable for making a dough, like for example semolina or powder, are conventionally considered to be flours.

The proportions indicated above, unexpectedly since they are contrary to the teachings of the prior art, make it possible to obtain a bread product that, whilst having a large amount of hemp, has optimal cooking, proving and consistency levels, together with a very balanced taste, as can be easily recognised by a panel of tasters.

The minimum amounts of hemp indicated are unexpectedly also suitable for making deserts, whereas for savoury breads it is preferable to adopt amounts of hemp in the range 80-200 grams, which are thus greater than the prior art mixed with spelt, giving an end product having a less bitter taste and with less or no toasting during cooking.

Preferably, the bread product comprises exclusively the ingredients indicated above, for example when used to make hemp bread.

In general, the food products that can be made with the formulation indicated above are at least leavened bread food products or unleavened pasta for pasta dishes.

According to a preferred general characteristic of the invention, the hemp flour used in the recipe is obtained from dehusking of the virgin grains or from virgin grains freed only of the oil, where the term virgin grains is meant to indicate grains that have not undergone other treatments.

Preferably, the hemp flour is obtained by milling whole grains.

According to the invention the strength of the flours used in the mixture of the bread product must be in the following ranges:
- strength of the soft wheat flour: 140-380W
- proteins of the durum wheat flour 10-13%
- proteins of the hemp flour 24-35%;

In general, it is preferable to use flours with a degree of sieving during milling as specified hereinafter (according to the Italian classification):
- soft wheat flour: degree of sieving 0 or 1;
- durum wheat flour: fine or course double-milled durum wheat for making bread (this preferably means with damaged starches);
- hemp flour: degree of wholemeal sieving;
where the following table gives the names in Italy and the corresponding name in other countries:

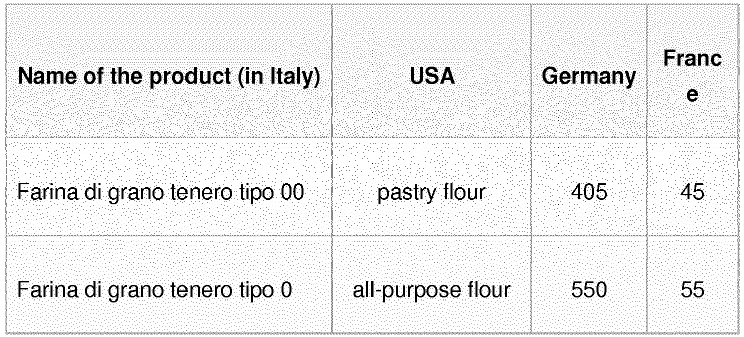

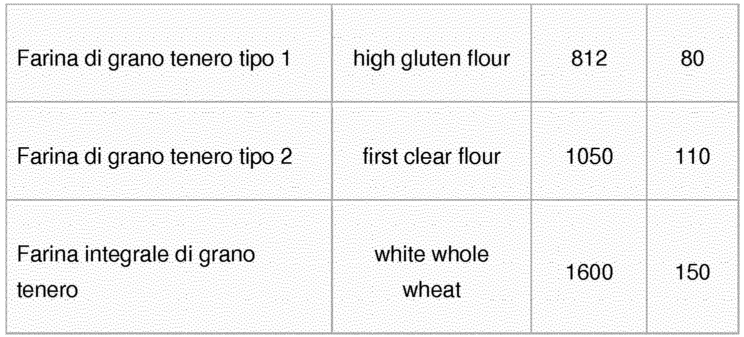

Also described herein but not forming part of the present invention is a yeast starter comprising at least wholemeal hemp flour and soft wheat flour. The yeast starter thus obtained is particularly effective and, surprisingly, with respect to other yeast starters can be added to the dough or to the mixture of flours directly in dry state without the need for prior reactivation by addition of water. Such yeast is indeed capable of reactivating directly in the dough.

Preferred practical examples indicate that for every kg of mix of hemp flour and soft wheat flour there are up to 700 grams of hemp flour. For example, to make bread, with a mix of flours according to the formulation indicated earlier, it is possible to use a yeast starter with 100 grams of hemp flour every kg of soft wheat flour.

According to the preferred embodiments of such a yeast, it comprises honey and 500-600 grams of water for every kg of flour. The honey is preferably organic honeydew.

The honey is preferably forest honeydew. Further described herein but not forming part of the present invention is a process for producing yeast starter characterised in that it comprises the following steps:
- kneading at least hemp flour and soft wheat flour in the proportions indicated earlier, adding water (preferably 500-600 grams for every kg of soft wheat flour);
- leaving the dough to rest until it acidifies;
- drying the yeast starter.

The dried yeast is preferably reduced to the flour state.

Preferably, the yeast contains exclusively the ingredients indicated above.

According to a second aspect thereof, the invention concerns a kit for making a food product with hemp comprising the flours indicated above in the doses indicated in the first aspect.

In the case in which the kit is intended for leavened bread, the dose of hemp flour is preferably separate from the doses of the other flours and preferably the kit comprises the instructions to add the hemp after having obtained a dough with the other flours and water.

However, this does not rule out the possibility of all of the flours being comprised in a single mixture.

The kit preferably comprises an amount of the yeast indicated above, predosed for the amount of flours of the kit. The yeast is preferably in dry state and more preferably in the flour state. In the case in which breads are being made, the yeast preferably is already mixed with the wheat flours whereas in the case of a kit for making both pasta and breads, it is preferable for it to be separate.

Preferably, the kit contains an amount of dry yeast comprised in the range 20-80 grams for every kg of mixture of flours.

According to a third aspect thereof, the invention concerns a process for producing a leavened bread food product with hemp flour, characterised in that it comprises the step of kneading soft wheat flour having a strength of 140-380W, durum wheat flour and water until a dough is formed, when the dough is formed the process comprises the step of adding hemp flour continuing to knead until a homogeneous dough is obtained, as defined in claim 9.

This advantageously allows optimal hydration of the resulting dough, especially in the case of wholemeal hemp flour.

Preferably, there is the step of kneading together with the flour a yeast starter obtained by acidification of a dough comprising wheat flour and wholemeal hemp flour. Such a yeast is surprisingly active and allows optimal proving of the bread.

Moreover, the addition of such a yeast is surprisingly practical since it can be directly kneaded in dry state without prior reactivation by addition of water.

According to some preferred embodiments of the invention, the dough with the hemp flour is proved in an environment with prevalent, or only presence of carbon dioxide. For example, the environment is saturated with carbon dioxide.

The dough thus proven surprisingly has a very long workable time, and it can also remain in proving for prolonged periods.

The dough thus proven is surprisingly capable of being cooked at a temperature less than or equal to 157°C. This, for example, makes it possible to add noble ingredients to the dough, like THC (Delta-9-tetrahydrocannabinol) and/or CBD (cannabidiol) derived from the hemp plant, which at this temperature are not altered during cooking.

The Applicant has surprisingly discovered that it is capable of perfectly cooking the hemp dough for breads even at 100°C, where the cooking in the tests carried out continued for 7 hours. At this temperature, the formation of acrylamide (cancerogenous) is totally avoided.

Further characteristics and advantages of the present invention will become clearer from the following detailed description of preferred embodiments thereof, given for indicating and not limiting purposes.

The preferred recipe, according to the present invention, for making hemp bread, foresees exclusively the following ingredients in the following amounts:
- 750 grams of soft wheat flour;
- 150 grams of durum wheat flour;
- 90 grams of hemp flour;
- 20-80 grams of yeast starter (variable depending on the proving temperature).
- water as needed

Cooking takes place at low temperatures, by this meaning for example a temperature less than or equal to 240°C, more preferably less than or equal to 157°C.

The yeast starter is obtained by kneading soft wheat flour, wholemeal hemp flour, water, and forest honeydew where for every kg of wheat flour, 100 grams of hemp flour and 550 grams of water are used.

From this dough the yeast starter is obtained, leaving it to rest for at least 48 hours and possible rekneading it.

The yeast obtained can be taken to a dry and floury state. This makes it easier to conserve and store, as well as allowing sale in convenient packs ready to be added to the mixture of flours to make the bread.

It is also possible to mix the yeast directly with the flours to make a totally prepackaged mixture ready for use.

It should be observed in general that the bread comprising a mixture of flours according to the present invention is capable of proving and cooking correctly also using a conventional yeast, for example a wheat yeast starter. In this case, however, the yeast could need to be reactivated prior to making the bread dough, for which reason it is not suitable for making at home. Moreover, a yeast without hemp will not contribute to giving the bread a contribution to the total amount of hemp present in the bread.

The quality of the flours is as indicated in the preamble.

The hemp flour also preferably has the following approximate characteristics (tolerance +/- 10% except where indicated otherwise), to be considered jointly but also possibly independently from one another:
*Protein: 30-40% (preferably 35%);*
*certification: IT-BIO-004 or equivalent;*
*appearance: grey-dark green coloured flour;*
*smell: fresh, pleasant;*
*taste: characteristic, nutty;*
*consistency: floury;*
*production: the seeds are pressed in an extrusion press to take out the oil, the consequent oil-free paste is then milled to turn it into flour;*
*qualitative characteristics: the passage in the extrusion press ensures the absence of additives;*
*wetness: 6-9%*
oil content: 7-10%
Nutritional values per 100 grams:
   calories: 1264KJ/305kcal
   protein: 31,5 g
   carbohydrates: 4,8 g
   sugars: 3,2 g
   fats: 8,6 g
   saturated fats: 1,2 g
   fibre: 40,5 g
   sodium<0.01 g

Preferably, all of the ingredients are at least organic.

Where "dry" state is indicated, those skilled in the art will understand that there is a degree of humidity characteristic of flour suitable for storing.

According to a practical example of a production process, water and wheat flour are placed in a kneading machine in the following proportions: 10 litres of water for every 18,5 kg of wheat flour with a tolerance of 10%. The term wheat flour is meant to indicate a mixture of soft wheat and durum wheat flours in the proportions indicated earlier.

It is kneaded and when the dough with the wheat flour and water is formed, kneading is continued adding water to integrate the initial one so as to obtain a final dough with an amount of water between 55% and 60%. For example, the integrative hydration during kneading is between 15% and 20% of the initial water, i.e. in the case of 10 initial litres, the integrative hydration is 1,5-2 litres. After hydration, the wholemeal hemp flour is added to the dough and it is kneaded until it is completely homogenised.

The aforementioned dry yeast starter flour can be added before kneading in the following proportions: 10% by weight of the dough.

Alternatively, it is possible to use brewer's yeast, in which case the proportion is 1/5 of a gram for every 50 kg of dough.

A general system for proving the hemp dough in prevalent or only presence of carbon dioxide is to close it in hermetic containers. The hemp accelerates the acidification of the dough that immediately starts to prove and "quickly consumes the oxygen present inside" remaining in the presence of only carbon dioxide.

The minimum proving time is for example 6 hours, but it can be longer, even 48 hours, especially if the dough is rehydrated as stated above.

The proved dough can be rekneaded and surprisingly conserves characteristics of workability for a long time, which is unknown with conventional hemp doughs.

Moreover, it can be cooked at a temperature less than or equal to 157°C, keeping more beneficial substances, and not altering possible additional substances like THC and CBD derived from the hemp plant.

The same proportions of wheat flours (durum and soft) and of wholemeal hemp flour can be used, kneading them together even from the start, to obtain pasta for pasta dishes that surprisingly has an excellent consistency during cooking, does not fall apart and leaves the cooking water practically clean.

In general, it should be observed that in the case in which it is wished to make a bread product, it is preferable to use re-milled durum wheat flour, whereas in the case of pasta for pasta dishes it is preferable to use a non-re-milled durum wheat flour, i.e. with undamaged starches, even if this does not rule out the possibility of using double-milled flours, since the Applicant has obtained surprisingly good results. The advantage of using double-milled flour also for pasta is that of providing a single kit to be used without distinction for bread and pasta.

The Applicant observes that the bread dough of the present invention perfectly tolerates the suspension of additional solid elements, such as oilseeds.

It should be observed in general that the yeast starter in dry state of the present invention, thanks to its reactivation properties, is advantageous for the shelf life and the storage of the product, however there is no reason why it cannot be used in fresh state.

Of course, the embodiments and the variants described and illustrated up to now are purely examples and those skilled in the art can make numerous modifications and variants in order to satisfy specific and contingent requirements, including for example the combination of said embodiments and variants, all of which are in any case covered by the scope of protection of the present invention as defined by the following claims.

## Claims

1. Food product with hemp, cooked or intended for cooking, comprising at least one mixture of flours, water and yeast **characterised in that** every kg of mixture of flours comprises at least amounts of flours in the following ranges:
- 600-900 grams of soft wheat flour ;
- 50-200 grams of durum wheat flour;
- 50-200 grams of hemp flour.
wherein the flours have the following parameters:
- strength of the soft wheat flour: 140-380 W
- proteins of the durum wheat flour 10%-13%
- proteins of the hemp flour 24%-35%.

2. Food product according to claim 1, **characterised in that** the product is a leavened bread food product or an unleavened pasta for pasta dishes.

3. Product according to any one of the previous claims, **characterised in that** the degree of sieving during milling of flours is as follows (according to the Italian classification):
- soft wheat flour: degree of sieving 0 or 1;
- durum wheat flour: fine or course double-milled durum wheat for making bread;
- hemp flour: degree of wholemeal sieving.

4. Product according to claim 2, **characterised in that** it is a leavened bread with a yeast starter comprising at least wholemeal hemp flour and soft wheat flour having a strength of 140-380W.

5. Product according to the previous claim, **characterised in that** the yeast starter has for every kg of mix of hemp flour and soft wheat flour up to 700 grams of hemp flour, preferably the yeast starter comprises honey and an amount of water comprised in the range 500-600 grams for every kg of flour.

6. Kit for making a food product with hemp comprising the flours of claim 1 in the doses indicated in claim 1.

7. Kit according to claim 6, **characterised in that** it is a kit for leavened breads and the dose of hemp flour is separate from the doses of the other flours.

8. Kit according to claim 6 or 7 comprising a yeast starter which comprises wholemeal hemp flour and soft wheat flour having a strength of 140-380W, in a dry state.

9. Process for producing a leavened bread food product with hemp flour, **characterised in that** it comprises the step of kneading soft wheat flour having a strength of 140-380W, durum wheat flour and water until a dough is formed, and when the dough is formed the process comprises the step of adding hemp flour continuing to knead until a homogeneous dough is obtained, wherein the amounts and proteins are as in claim 1.

10. Process according to the previous claim, **characterised in that** it comprises the step of kneading together with the flour of a yeast starter obtained by acidification of a dough comprising wheat flour and wholemeal hemp flour.

11. Process according to any one of claims 9 to 10, **characterised in that** the dough with the hemp flour is leavened in an environment with prevalent, or only presence of carbon dioxide.

12. Process according to the previous claim, **characterised in that** the proved dough is cooked at a temperature less than or equal to 157°C.

13. Process according to any one of claims 9 to 12, **characterised in that** during the kneading THC (Delta-9-tetrahydrocannabinol) and/or CBD (cannabidiol) is added.

14. Process according to claim 11, **characterized in that** producing said yeast starter comprises the following steps:
- kneading at least wholemeal hemp flour and soft wheat flour through adding water;
- leaving the dough to rest until it acidifies;
- drying the yeast starter.

## Patentansprüche

1. Nahrungsmittelprodukt mit Hanf, gekocht oder zum Kochen bestimmt, umfassend mindestens ein Gemisch aus Mehlen, Wasser und Hefe, **dadurch gekennzeichnet, dass** jedes kg Mehlgemisch mindestens Mengen von Mehlen in den folgenden Bereichen umfasst:
- 600 bis 900 Gramm Weichweizenmehl,
- 50 bis 200 Gramm Hartweizenmehl,
- 50 bis 200 Gramm Hanfmehl,
wobei die Mehle folgende Parameter aufweisen:
- Stärke des Weichweizenmehls: 140 bis 380 W
- Proteine des Hartweizenmehls 10 % bis 13 %
- Proteine des Hanfmehls 24 % bis 35 %.

2. Nahrungsmittelprodukt nach Anspruch 1, **dadurch gekennzeichnet, dass** das Produkt ein gesäuertes Brotnahrungsmittelprodukt oder eine ungesäuerte Pasta für Pastagerichte ist.

3. Produkt nach einem der vorhergehenden Ansprüche, **dadurch gekennzeichnet, dass** der Siebgrad beim Mahlen von Mehlen wie folgt ist (gemäß der italienischen Klassifizierung):
- Weichweizenmehl: Siebgrad 0 oder 1,
- Hartweizenmehl: feiner oder grob doppelt gemahlener Hartweizen zur Brotherstellung,
- Hanfmehl: Grad der Vollkornsiebung.

4. Produkt nach Anspruch 2, **dadurch gekennzeichnet, dass** es sich um ein gesäuertes Brot mit einem Hefestarter handelt, der mindestens Vollkornhanfmehl und Weichweizenmehl in einer Stärke von 140 bis 380 W umfasst.

5. Produkt nach dem vorhergehenden Anspruch, **dadurch gekennzeichnet, dass** der Hefestarter für jedes kg Gemisch aus Hanfmehl und Weichweizenmehl bis zu 700 g Hanfmehl aufweist; vorzugsweise umfasst der Hefestarter Honig und eine Wassermenge im Bereich von 500 bis 600 g für jedes kg Mehl.

6. Kit zur Herstellung eines Nahrungsmittelprodukts mit Hanf, umfassend die Mehle nach Anspruch 1 in den in Anspruch 1 angegebenen Dosen.

7. Kit nach Anspruch 6, **dadurch gekennzeichnet, dass** es sich um ein Kit für Sauerteigbrote handelt und die Dosis von Hanfmehl von den Dosen der anderen Mehle getrennt ist.

8. Kit nach Anspruch 6 oder 7, umfassend einen Hefestarter, der Vollkornhanfmehl und Weichweizenmehl mit einer Stärke von 140 bis 380 W im trockenen Zustand umfasst.

9. Verfahren zur Herstellung eines gesäuerten Brotnahrungsmittels mit Hanfmehl, **dadurch gekennzeichnet, dass** es den Schritt des Knetens von Weichweizenmehl mit einer Stärke von 140 bis 380 W, Hartweizenmehl und Wasser bis zur Bildung eines Teigs umfasst; sobald der Teig gebildet ist, umfasst das Verfahren den Schritt des Hinzufügens von Hanfmehl und das Weiterkneten, bis ein homogener Teig gewonnen wird, wobei die Mengen und Proteine denen von Anspruch 1 entsprechen.

10. Verfahren nach dem vorhergehenden Anspruch, **dadurch gekennzeichnet, dass** es den Schritt des Knetens zusammen mit dem Mehl eines Hefestarters umfasst, der durch Ansäuern eines Teigs gewonnen wird, welcher Weizenmehl und Vollkornhanfmehl enthält.

11. Verfahren nach einem der Ansprüche 9 bis 10, **dadurch gekennzeichnet, dass** der Teig mit dem Hanfmehl in einer Umgebung mit vorherrschendem oder lediglich vorhandenem Kohlendioxid gesäuert wird.

12. Verfahren nach dem vorhergehenden Anspruch, **dadurch gekennzeichnet, dass** der aufgegangene Teig bei einer Temperatur von weniger als oder gleich 157 °C gebacken wird.

13. Verfahren nach einem der Ansprüche 9 bis 12, **dadurch gekennzeichnet, dass** während des Knetens THC (Delta-9-Tetrahydrocannabinol) und/oder CBD (Cannabidiol) zugegeben wird.

14. Verfahren nach Anspruch 11, **dadurch gekennzeichnet, dass** die Herstellung des Hefestarters die folgenden Schritte umfasst:
- Kneten von zumindest Vollkornhanfmehl und Weichweizenmehl durch Zugeben von Wasser,
- Rasten lassen des Teiges, bis er sauer ist,
- Trocknen des Hefestarters.

## Revendications

1. Produit alimentaire avec du chanvre, cuit ou prévu pour être cuit, comprenant au moins un mélange de farines, d'eau et de levure **caractérisé en ce que** chaque kg de mélange de farines comprend au moins des quantités de farines dans les fourchettes suivantes :
- 600-900 grammes de farine de blé tendre ;
- 50-200 grammes de farine de blé dur ;
- 50-200 grammes de farine de chanvre.
où les farines ont les paramètres suivants :
- force boulangère de la farine de blé tendre : 140-380 W
- protéines de la farine de blé dur 10%-13%
- protéines de la farine de chanvre 24%-35%.

2. Produit alimentaire selon la revendication 1, **caractérisé en ce que** le produit est un produit alimentaire constituant du pain au levain ou une pâte non levée pour des plats de pâtes.

3. Produit selon l'une quelconque des revendications précédentes, **caractérisé en ce que** le degré de tamisage pendant le broyage des farines est comme suit (selon la classification italienne) :
- farine de blé tendre : degré de tamisage 0 ou 1 ;
- farine de blé dur : fine ou grossière de blé dur deux fois moulue pour faire du pain ;
- farine de chanvre : degré de tamisage de la farine complète.

4. Produit selon la revendication 2, **caractérisé en ce que** c'est du pain au levain avec un démarreur de fermentation comprenant au moins de la farine complète de chanvre et de la farine de blé tendre avec une force boulangère de 140-380 W.

5. Produit selon la revendication précédente, **caractérisé en ce que** le démarreur de fermentation a pour chaque kg de mélange de farine de chanvre et de farine de blé tendre jusqu'à 700 grammes de farine de chanvre, de préférence le démarreur de fermentation comprend du miel et une quantité d'eau comprise dans une fourchette entre 500 et 600 grammes pour chaque kg de farine.

6. Kit pour fabriquer un produit alimentaire avec du chanvre comprenant les farines de la revendication 1 dans les doses indiquées dans la revendication 1.

7. Kit selon la revendication 6, **caractérisé en ce que** c'est un kit pour les pains au levain et la dose de farine de chanvre est séparée des doses des autres farines.

8. Kit selon les revendications 6 ou 7, comprenant un démarreur de fermentation qui comprend de la farine complète de chanvre et de la farine de blé tendre avec une force boulangère de 140-380 W, à l'état sec.

9. Processus pour produire un produit alimentaire constituant du pain au levain avec de la farine de chanvre, **caractérisé en ce qu'**il comprend l'étape de pétrissage de farine de blé tendre avec une force boulangère de 140-380 W, de farine de blé dur et l'eau jusqu'à ce que la pâte soit formée et, lorsque la pâte est formée, le processus comprend l'étape d'ajouter de la farine de chanvre en continuant de pétrir jusqu'à ce qu'une pâte homogène soit obtenue, où les quantités et les protéines sont comme dans la revendication 1.

10. Processus selon la revendication précédente, **caractérisé en ce qu'**il comprend l'étape du pétrissage conjointement avec la farine d'un démarreur de fermentation obtenu par l'acidification d'une pâte comprenant de la farine de blé et de la farine complète de chanvre.

11. Processus selon l'une quelconque des revendications 9 à 10, **caractérisé en ce que** la pâte avec la farine de chanvre lève dans un environnement ou le dioxyde de carbone prévaut ou est seulement présent.

12. Processus selon la revendication précédente, **caractérisé en ce que** la pâte levée est cuite à une température inférieure ou égale à 157 °C.

13. Processus selon l'une quelconque des revendications 9 à 12, **caractérisé en ce que** l'on ajoute pendant le pétrissage du THC (Delta-9-tétrahydrocannabinol) et/ou du CBD (cannabidiol).

14. Processus selon la revendication 11, **caractérisé en ce que** la production dudit démarreur de fermentation comprend les étapes suivantes :
- pétrir au moins de la farine complète de chanvre et de blé tendre en ajoutant de l'eau ;
- laisser la pâte reposer jusqu'à ce qu'elle s'acidifie ;
- faire sécher le démarreur de fermentation.
